## Europäisches Patentamt

## European Patent Office

## Office européen des brevets

(19)

(11) Numéro de publication: **0 064 115 B2**

## NOUVEAU FASCICULE DE BREVET EUROPEEN

(12)

(45) Date de publication du nouveau fascicule du brevet:
28.12.88

(51) Int. Cl.⁴: **A 01 D 43/10**

(21) Numéro de dépôt: **81400717.5**

(22) Date de dépôt: **06.05.81**

(54) **Faucheuse-conditionneuse.**

(43) Date de publication de la demande:
**10.11.82 Bulletin 82/45**

(45) Mention de la délivrance du brevet:
**05.12.84 Bulletin 84/49**

(45) Mention de la décision concernant l'opposition:
**28.12.88 Bulletin 88/52**

(84) Etats contractants désignés:
**AT CH DE FR GB LI NL SE**

(56) Documents cités:
**DE-A- 1 965 749**
**FR-A- 2 424 693**
**GB-A- 1 010 176**
**GB-A- 2 007 955**
**US-A- 3 092 946**

**"Ingenious Mechanisms", by F.D. Jones, edit. 1975**

(73) Titulaire: **JOHN DEERE (Société Anonyme), 8, Quai de la Madeleine, F-45000 Orléans (FR)**

(72) Inventeur: **Gold, Ralph C., 9, Rue Sonjour, F-70100 Gray-la-Ville (FR)**

(74) Mandataire: **Pruvost, Marc Henri et al, Cabinet ORES 6, Avenue de Messine, F-75008 Paris (FR)**

EP 0 064 115 B2

**Description**

La présente invention concerne les faucheuses-conditionneuses du type utilisé pour couper et conditionner des produits de récolte, tels que de l'herbe ou du fourrage.

Les faucheuses-conditionneuses connues comprennent généralement un châssis destiné à être attelé à un véhicule tracteur et sur lequel est montée une barre de coupe qui peut être du type à lame, mais qui est souvent dans les faucheuses-conditionneuses modernes d'un type comportant un certain nombre de disques ou toupies tournant par paires en sens opposés pour couper les produits de récolte sur pied. Dans un type de machines connu, cette barre de coupe est surmontée vers sa partie arrière d'un rotor de conditionnement constitué par des dents, des doigts ou des éléments analogues montés sur un arbre orienté transversalement à la direction d'avancement de la machine, ce rotor étant combiné à un capot de conditionnement qui a pour effet de guider les produits de récolte coupés pendant leur conditionnement, de provoquer leur passage vers l'arrière au-dessus du rotor et d'assurer, sous l'effet du rotor, leur projection vers l'arrière de la faucheuse-conditionneuse, pour former un andain.

On sait que, pour obtenir un conditionnement approprié des produits, il est nécessaire de pouvoir régler la position du capot de conditionnement par rapport aux extrémités des dents ou doigts du rotor en fonction de la condition, notamment du degré d'humidité des produits de récolte, et de leur nature. On a proposé à cet effet, dans la technique antérieure, diverses solutions pour le réglage de ce capot. Un capot réglable de ce type est décrit par exemple dans la demande de brevet français FR-A 2 424 933.

On a également proposé, dans US-A 3 092 946 l'emploi d'un mécanisme à tige filetée pour le réglage d'un capot.

Le but de l'invention est de créer une faucheuse-conditionneuse équipée d'un capot de conditionnement agencé de façon à permettre, avec des moyens particulièrement simples et de commande aisée, le réglage de ce capot par rapport au rotor.

L'invention est matérialisée dans une faucheuse-conditionneuse selon la revendication principale.

La tige filetée et l'écrou présentent judicieusement un filetage de type irréversible.

Ainsi, le réglage du capot de conditionnement par rapport aux extrémités des doigts du rotor peut être assuré de façon aisée et rapide par rotation de la manivelle actionnant la tige filetée, qui déplace ainsi l'écrou associé et avec lui l'élément en prise avec le bord correspondant du capot. Si les filetages de la tige et de l'écrou sont de type irréversible, on peut si désiré ne pas prévoir de blocage ou verrouillage pour retenir le capot dans la position de réglage obtenue.

Les capots de conditionnement des machines de ce type sont généralement en tôle qui est souvent élastiquement déformable. Ainsi, lorsqu'un dispositif de réglage du type considéré par l'invention est prévu pour un seul des bords du capot, l'autre bord peut être relié au corps de la machine soit de façon pivotante, soit de façon fixe, le réglage du capot de conditionnement s'effectuant dans ce dernier cas par déformation élastique de la tôle qui le constitue. Mais il est bien entendu également possible de prévoir un tel dispositif de réglage en combinaison avec chacun des bords transversaux du capot de conditionnement.

Afin d'obtenir une position de réglage uniforme sur toute la largeur du capot de conditionnement, l'élément en prise avec le bord transversal de ce capot a une longueur telle qu'il s'étende sur une distance notable, notamment sur la majeure partie de la largeur dudit capot de conditionnement. La position du dispositif de réglage par rapport à la largeur du capot peut être choisie de façon quelconque, mais on positionnera de préférence ledit dispositif afin que le réglage obtenu soit constant sur toute la largeur du capot. Ainsi, une possibilité consiste à prévoir le dispositif de réglage vers le milieu de la machine, la liaison entre la pièce formant écrou et l'élément de déplacement du bord conjugué étant placée sensiblement au milieu du capot de conditionnement. Mais on pourrait également monter ce dispositif d'un côté du capot et prévoir un renvoi s'étendant jusqu'à l'autre côté, en vue d'une commande conjointe sur les deux côtés du capot. Une autre solution consiste à prévoir un tel dispositif de réglage de chaque côté du capot, bien que les moyens requis soient alors doublés, la position de réglage de chaque dispositif devant en outre être correctement repérée.

La barre de déplacement du bord du capot doit être engagée dans un repli de tôle dudit capot, d'une manière rendant ainsi possible un certain mouvement relatif lors du réglage, ce repli de tôle pouvant être continu ou bien formé par des logements de réception répartis sur la largeur du capot et ménagés par exemple par des pattes recourbées ou roulées à partir de la tôle. On peut également prévoir vers le bord réglable du capot des pattes munies de trous dans lesquels l'élément de réglage est engagé.

Suivant un mode de réalisation paraissant judicieux, la pièce formant écrou adaptée sur la tige filetée portant la manivelle ou l'organe de manœuvre équivalent est empêchée de tourner avec cette tige filetée par un doigt ou analogue engagé dans une fente de guidage d'un support fixé sur la machine. Dans ce cas, ce doigt est alors relié à l'élément de réglage du bord conjugué du capot, ou bien il forme lui-même, par exemple par son prolongement, cet élément de réglage.

Il est prévu, entre le doigt ou l'élément analogue prévu sur l'écrou et l'élément en prise avec le bord du capot de conditionnement, une liaison constituée par un levier coudé moité à pivotement sur la machine et relié par un bras à ce doigt prévu sur l'écrou et par son autre bras à l'élément de réglage du bord du capot. Un agencement de ce type est judicieux par exemple pour le réglage du bord inférieur du capot de conditionnement étant donné que l'on a alors disposé la tige filetée et la manivelle verticalement, ce qui facilite l'accès et la manœuvre, et obtenir par renvoi un déplacement sensiblement horizontal du bord inférieur du capot pour le rapprocher ou l'écarter des extrémités des doigts du rotor.

Mais la liaison précitée peut être constituée également par une simple biellette.

On voit ainsi que le dispositif de réglage suivant l'invention permet, par la manœuvre de la manivelle, de modifier la position du capot de conditionnement par rapport aux extrémités des doigts du rotor, par exemple par déformation élastique de la tôle de ce capot, pour l'adapter aux conditions de travail chaque fois rencontrées, en vue de l'obtention d'un travail optimum. On conçoit que cette opération peut être réalisée de manière rapide et simple par le conducteur du tracteur auquel la faucheuse-conditionneuse est attelée, sans que cette opération exige l'emploi d'un outil ou une connaissance ou habilité quelconque de la part de l'opérateur.

La description qui va suivre, faite en ragard des dessins annexés, donnés à titre non limitatif, permettra de mieux comprendre l'invention.

La Fig. 1 est une vue schématique de profil d'une faucheuse-conditionneuse à laquelle l'invention est appliquée.

La Fig. 2 est une vue montrant une partie du dispositif de réglage, en regardant dans une direction perpendiculaire à celle de la Fig. 1.

La Fig. 3 est une vue schématique partielle correspondant à une variante de réalisation.

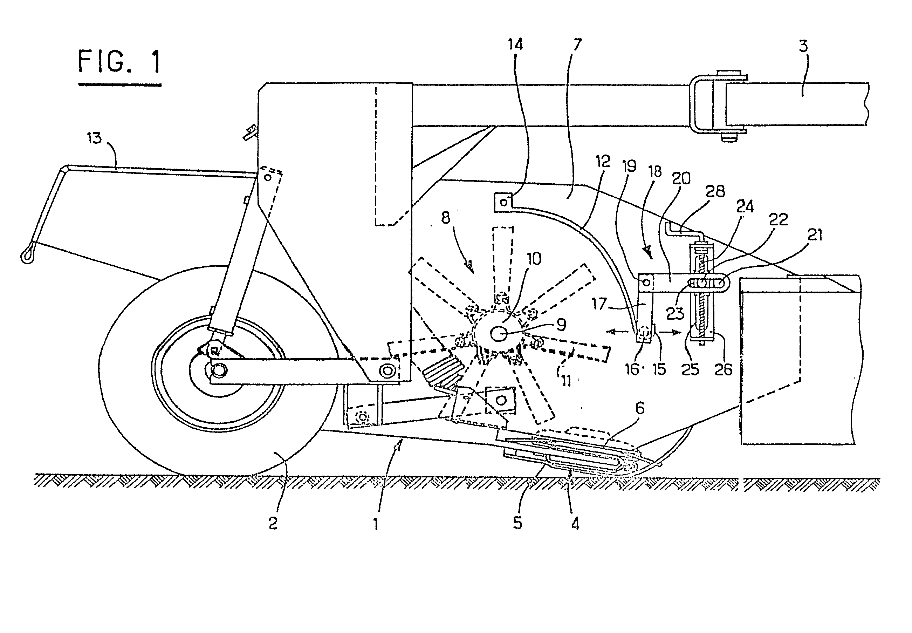

On a représenté schématiquement sur la Fig. 1 une faucheuse-conditionneuse comprenant un châssis 1 qui est supporté à partir du sol par des roues arrière 2, ce châssis étant relié par un timon ou une flèche d'attelage dont une partie est visible en 3 à un véhicule tracteur qui peut être un tracteur agricole.

Le châssis 1 porte une barre de coupe désignée d'une façon générale par la référence 4, qui comprend dans le cas présent une poutre 5 sur laquelle sont montés des disques de coupe rotatifs 6 tournant par paires en sens opposés d'une manière en soi connue, pour couper ou faucher les produits de récolte sur le champ lors de la progression de la machine.

Le châssis 1 porte également deux parois latérales 7 entre lesquelles est monté un rotor désigné d'une façon générale par la référence 8, comprenant de manière connue un arbre transversal horizontal 9 qui porte par l'intermédiaire de flasques ou moyeux 10 des dents ou doigts 11 reliés à ces flasques à articulation, également d'une manière en soi connue.

Un capot de conditionnement indiqué en 12 est prévu sur la machine entre les parois latérales 7. Ce capot de conditionnement entoure comme montré sur la Fig. 1 la partie avant et la partie supérieure du rotor de conditionnement. Un déflecteur arrière 13 est également porté par le châssis 1 de la machine.

Le fonctionnement d'ensemble d'une faucheuse-conditionneuse de ce type est bien connu. Les produits coupés par les disques 6 de la barre de coupe 4 se déplacent vers l'arrière au-dessus de ces disques 6 et sont alors repris par les dents ou doigts 11 du rotor 8, qui est entraîné à vitesse élevée par des moyens convenables (non représentés) dans le sens anti-horaire quand on regarde la Fig. 1. Le capot 12 a pour but d'assurer, en combinaison avec les dents ou doigts du rotor 8, le conditionnement des produits de récolte et de guider ces produits pour les faire passer au-dessus de ce rotor, lesdits produits étant alors projetés en direction de l'arrière et étant rabattus sur le sol en andain par le déflecteur arrière 13.

Comme indiqué précédemment, on sait que pour obtenir un conditionnement approprié des produits de récolte, il est nécessaire de pouvoir adapter la position du capot de conditionnement par rapport au rotor, et plus spécialement la distance qui sépare ce capot des extrémités libres des doigts du rotor de conditionnement aux conditions de travail chaque fois recontrées et notamment au degré d'humidité et à la nature des produits de récolte fauchés et conditionnés.

Suivant le mode de réalisation représenté sur la Fig. 1, le capot 12 est muni sur son bord supérieur arrière de pattes de fixation 14 par lesquelles il est fixé sur les parois latérales 7 du corps de la machine. Ce capot est muni par ailleurs, vers son bord inférieur avant, d'un repli de tôle 15 qui s'étend sur la plus grande partie de sa largeur.

Un élément de réglage constitué par une barre 16 est logé à l'intérieur de ce repli de tôle 15. Il s'étend sur la majeure partie et judicieusement sur la totalité de la largeur du capot de conditionnement 12. La barre 16 est formée de préférence de deux parties s'étendant de part et d'autre de l'extrémité inférieure du bras vertical 17 d'un levier coudé 18 monté à pivotement en 19 sur la machine et dont le bras horizontal 20 présente une fente ou lumière de forme allongée 21 s'étendant selon l'axe longitudinal de ce bras 20 et par laquelle ledit bras est engagé sur un doigt de guidage 22.

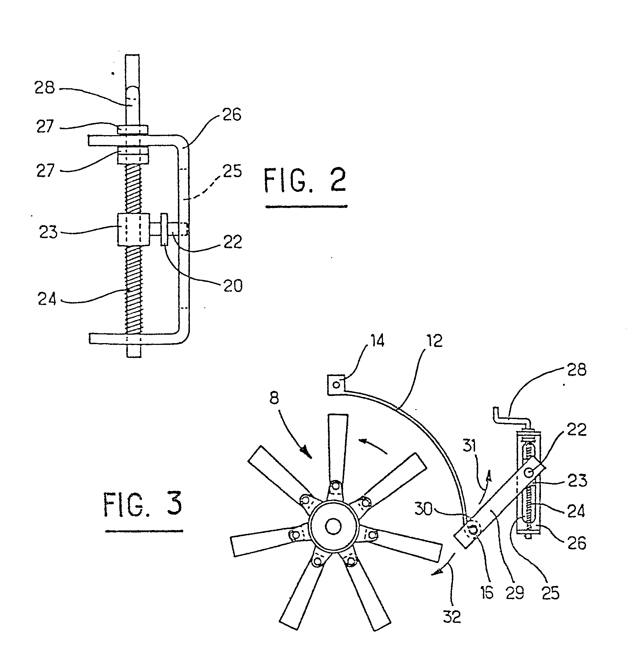

Comme cela est mieux visible sur la Fig. 2, le doigt 22 est porté par un écrou 23 qui est engagé sur une tige filetée 24. L'extrémité du doigt de guidage 22 pénètre en outre dans une fente verticale 25 d'un support 26 en forme d'U qui est fixé de toute manière appropriée sur le corps de la machine. La tige filetée 24, qui peut tourner librement dans les deux branches horizontales du support en U 26, est immobilisée axialement par rapport à ce support comme indiqué en 27, et elle porte à son extrémité supérieure une manivelle 28. Les filetages de la tige filetée 24 et de l'écrou 23 sont de type irréversible.

Le mode d'utilisation du dispositif ainsi décrit se comprend aisément à la lecture de ce qui précède. Lorsque la position du capot de conditionnement 12 par rapport aux extrémités des doigts 11 doit être modifiée, la manivelle 28 est actionnée, ce que fait tourner la tige filetée 24 en provoquant en conséquence un déplacement vers la haut ou vers le bas de l'écrou 23, selon le sens de rotation. Cet écrou 23 est empêché de tourner avec la tige filetée 24 par le guidage du doigt 22 dans la fente 25 du support 26. Ce déplacement de l'écrou 23 fait basculer dans un sens ou dans l'autre le levier coudé 18 autour du point 19, ce qui provoque un déplacement sensiblement horizontal de l'élément de réglage 16 en prise avec le replie 15 de tôle du capot 12, pour la rapprocher ou l'écarter des extrémités des doigts 11.

Suivant ce mode de réalisation, étant donné que le bord supérieur arrière du capot 12 est fixé en 14 sur les parois latérales 7, le réglage s'obtient par déformation élastique de la tôle formant ledit capot. Il va de soi toutefois que le bord supérieur arrière du capot pourrait être monté de façon pivotante par rapport aux parois latérales 7, ce qui permettrait un réglage sans déformation. Il va de soi également que l'on peut prévoir, en combinaison avec la manivelle et la tige filetée, des moyens de blocage dans la position chaque fois atteinte, ces moyens pouvant être constitués par un frein ou un varrou de type quelconque.

On a représenté sur la Fig. 3 une variante de réalisation. Sur cette Fig. 3, les éléments ou parties correspondant à ceux visibles sur les Fig. 1 et 2 ont été désignés par les mêmes références.

Suivant ce mode de réalisation, l'élément 16 de réglage du capot de conditionnement, qui est ici encore fixé en 14 par son bord supérieur arrière sur les parois latérales 7 de la machine, est relié par une biellette 29 au doigt 22 porté par l'écrou 23. Suivant cette variante de réalisation, il est prévu vers le bord inférieur avant du capot 12 des pattes 30 formées dans ce capot par repliage de la tôle ou fixées sur lui par soudage et munies de trous traversés par l'élément de réglage 16. Ceci tient compte du fait que, lors de la rotation de la manivelle 28, le déplacement vers le haut, par exemple, de l'écrou 23, transmit par le doigt 22 à la biellette 29, exerce une traction oblique en direction du haut sur ce bord inférieur du capot 12, comme indiqué par la flèche 31. On a indiqué par une flèche en 32 le déplacement subi par ce bord inférieur du capot 12 lorsqu'on fait tourner la manivelle 28 dans un sens qui déplace l'écrou 23 vers le bas. On comprend que, suivant ce mode de réalisation, le doigt 22 est engagé dans un trou correspondant de la biellette 29, et non pas dans une fente comme cela est le cas pour le levier coudé 18 représenté sur la Fig. 1.

On voit qu'ici encore la rotation de la manivelle 28 déplace le bord inférieur du capot 12 d'une manière qui écarte ou rapproche ce capot des extrémités des doigts du rotor. Alors que, dans le cas du mode de réalisation que montre la Fig. 1, le réglage du bord inférieur du capot se limite à un déplacement sensiblement horizontal, ce qui réduit progressivement le degré de réglage entre le bord inférieur et le bord supérieur du capot, cette réduction est nettement moins prononcée dans le cas de la Fig. 3 compte tenu de l'obliquité du déplacement du bord inférieur du capot 12 lors du réglage.

On comprend que, dans chacun des cas, on obtient d'une manière simple le réglage requis du capot de conditionnement en vue de son adaptation aux conditions de travail rencontrées. Comme indiqué précédemment, le dispositif décrit peut être prévu pour le bord inférieur du capot de conditionnement, ou bien pour son bord supérieur, ou encore simultanément pour les deux bords. Dans ce dernier cas, on peut prévoir une commande par manivelle séparée pour chacun des bords ou bien, grâce à des organes de renvoi appropriés, un réglage simultané des ces bords à partir d'une même manivelle.

## Revendications

1. Faucheuse-conditionneuse du type comprenant une barre de coupe (4) au-dessus et vers la partie arrière de laquelle est disposé un rotor (8) muni de dents ou doigts (11) tournant autour d'un axe horizontal (9) transversal à la direction d'avancement de la machine et combiné à un capot de conditionnement (12) entourant une partie de la circonférence du rotor pour guider les produits de récolte repris par celui-ci après qu'ils ont quitté la barre de coupe, pour les obliger à passer au-dessus du rotor en vue de leur projection sur le sol en andain à l'arrière de la machine, et des moyens pour régler la position de ce capot de conditionnement par rapport à ce rotor, ces moyens comportant, pour l'un au moins des bords transversaux de ce capot de conditionnement (12), un dispositif de réglage (18) comprenant un élément (16) en prise avec ce bord du capot, caractérisée en ce que cet élément est une barre (16) de longueur telle qu'elle s'étende sur une distance notable et de préférence au moins sur la majeure partie de la largeur de capot (12) avec le bord duquel elle est en prise par un repli de tôle (15) de ce capot ou dans des logements de réception formés par des pattes repliées ou roulées de la tôle de ce capot d'une manière rendant possible un certain mouvement relatif entre la barre et ledit bord du capot, et en ce que ladite barre (16) est reliée par un mécanisme articulé (17, 20; 29) à une pièce formant écrou (23) adaptée sur une tige filetée (24) verticale de position fixe sur la faucheuse-conditionneuse sauf pour sa rotation suivant son axe par une manivelle de manœuvre (28).

2. Faucheuse-conditionneuse suivant la revendication 1, caractérisée en ce que la tige filetée (24) et l'écrou (23) comportent un filetage de type irréversible.

3. Faucheuse-conditionneuse suivant la revendication 1 ou 2, caractérisée en ce que les moyens pour régler la position du capot de conditionnement (12) sont prévus sur un seul bord, l'autre bord étant relié de façon pivotante au corps (1, 7) de la faucheuse-conditionneuse ou étant fixé rigidement (en 14) sur ce corps.

4. Faucheuse-conditionneuse suivant la revendication 1 ou 2, caractérisée en ce que les moyens pour régler la position du capot (12) sont prévus sur chaque bord du capot de conditionnement (12).

5. Faucheuse-conditionneuse suivant la revendication 1, caractérisée en ce que la barre (16) en prise avec le bord du capot (12) s'étend de part et d'autre du dispositif de réglage (18) placé vers le milieu du capot de conditionnement (12).

6. Faucheuse-conditionneuse suivant la revendication 1, caractérisée en ce qu'il est prévu un dispositif de réglage (18) de chaque côté du capot de conditionnement (12).

7. Faucheuse-conditionneuse suivant l'une quelconque des revendications précédentes, caractérisée en ce que la liaison entre l'écrou (23) et la barre (16) est constituée par un levier coudé (18) monté à pivotement en un point fixe, disposé dans un plan longitudinal de la machine et relié par les extrémités de ses bras à cet écrou (23) et à cette barre (16), respectivement.

8. Faucheuse-conditionneuse suivant l'une quelconque des revendications 1 à 6, caractérisée en ce que la liaison entre l'écrou (23) et la barre (16) en prise avec le bord du capot est constituée par une biellette (29) reliée par ses extrémités à cet écrou (23) et à cette barre (16), respectivement.

**Patentansprüche**

1. Konditionierender Grasmäher des Typs, welcher einen Messerbalken (4) aufweist, über dem und nach hinten zu ein Rotor (8) angeordnet ist, der mit Zähnen oder Fingern (11) ausgerüstet ist und um eine horizontale Achse (9) quer zur Fahrtrichtung der Maschine drehbar und mit einer Konditionierungshaube (12) kombiniert ist, welche einen Teil des Umfanges des Rotors umgibt, um die Ernteprodukte, die von diesem aufgenommen worden sind, nachdem sie den Messerbalken verlassen haben, zu führen und sie zu veranlassen, im Hinblick auf ihre Wurfbahn oberhalb des Rotors bis auf den Boden in Form eines Schwades hinter der Maschine zu passieren, sowie Mittel zum Einstellen der Stellung der Konditionierungshaube in Bezug auf den Rotor, wobei diese Mittel für wenigstens eine der Querkanten der Konditionierungshaube eine Regelvorrichtung (18) umfassen, welche ein Element (16) aufweist, das an der Kante der Haube angreift, dadurch gekennzeichnet, dass dies Element eine Stange (16) von solcher Länge ist, dass sie sich über eine merkliche Distanz und vorzugsweise über wenigstens den grösseren Teil der Breite der Haube (12) erstreckt, wobei deren Seite in Eingriff mit einer Abbiegung des Bleches (15) der Haube oder mit Aufnahmeausnehmungen steht, die durch Laschen gebildet sind, welche aus dem Blech der Haube abgebogen oder angerollt sind, in der Weise, dass eine gewisse Relativbewegung zwischen der Stange und der genannten Seite der Haube möglich ist, und dass die Stange (16) durch einen gelenkigen Mechanismus (17, 20; 29) mit einem Stück in Form einer Mutter (23) verbunden ist, das an eine Gewindestange (24) angepasst ist, die in vertikaler Stellung auf dem konditionierenden Mäher mit Ausnahme ihrer Drehung um ihre Achse mit Hilfe einer Betätigungskurbel (28) befestigt ist.

2. Konditionierender Grasmäher nach Anspruch 1, dadurch gekennzeichnet, dass die Gewindestange (24) und die Mutter (23) ein Gewinde des irreversiblen Typs umfassen.

3. Konditionierender Grasmäher nach Anspuch 1 oder 2, dadurch gekennzeichnet, dass die Mittel zum Regeln der Stellung der Konditionierungshaube (12) nur für eine Kante vorgesehen ist, während die andere Kante schwenkbar mit dem Korpus (1, 7) des konditionierenden Grasmähers verbunden oder (bei 14) starr an diesem Körper befestigt ist.

4. Konditionierender Grasmäher nach Anspruch 1 oder 2, dadurch gekennzeichnet, dass die Mittel zum Regeln der Stellung der Haube (12) auf jeder Seite der Konditionierungshaube (12) vorgesehen sind.

5. Konditionierender Grasmäher nach Anspruch 1, dadurch gekennzeichnet, dass die Stange (16), die in Eingriff mit der Seite der Haube (12) steht, sich nach beiden Seiten der Regelvorrichtung (18) erstreckt, die zur Mitte der Konditionierungshaube (12) hin angeordnet ist.

6. Konditionierender Grasmäher nach Anspruch 1, dadurch gekennzeichnet, dass eine Regelvorrichtung (18) auf jeder Seite der Konditionierungshaube (12) angeordnet ist.

7. Konditionierender Grasmäher nach irgendeinem der voranstehenden Ansprüche, dadurch gekennzeichnet, dass die Verbindung zwischen der Mutter (23) und der Stange (16) durch einen gebogenen Hebel (18) gebildet ist, der schwenkbar an einem festen Punkt montiert ist, sich in einer Längsebene der Maschine erstreckt und durch die äussersten Enden seiner Arme mit der Mutter (23) bzw. mit der Stange (16) verbunden ist.

8. Konditionierender Grasmäher nach irgendeinem der Ansprüche 1 bis 6, dadurch gekennzeichnet, dass die Verbindung zwischen der Mutter (23) und der Stange (16), die mit der Seite der Haube in Eingriff steht, durch einen Gestängearm (29) gebildet ist, der mit seinen Enden mit der Mutter (23) bzw. der Stange (16) verbunden ist.

**Claims**

1. A reaping-conditioning machine of the type comprising a cutting bar (4) above and towards the rearward part of which is disposed a rotor (8) provided with teeth or fingers (11), rotating about a horizontal axis (9) which is transverse with respect to the direction of forward movement of the machine, and combined with a conditioning hood (12) which surrounds a portion of the circumference of the rotor to guide the crop products which are picked up by the rotor after they have left the cutting bar, to cause them to pass above the rotor for them to be projected onto the ground in a swath to the rear of the machine, and means for adjusting the position of the conditioning hood with respect to said rotor, these means comprising, for one at least of the transverse edges of this conditioning hood (12), an adjusting means (18) comprising an element (16) which is engaged with this edge of the hood, characterised in that this element is a bar (16) of a length such that it extends for a substantial distance and preferably at least for the major part of the width of the hood (12), with the edge of which it is engaged by a sheet metal fold portion (15) of the hood or in receiving housings formed by lugs which are bent or rolled from the sheet metal of the hood in a manner permitting a certain amount of relative movement between the bar and the said edge of the hood, and in that the said bar (16) is connected by an articulated mechanism (17, 20; 29) to a nut-forming member (23) which is fitted onto a vertical screw-threaded rod (24) fixed in position on the reaping-conditioning machine except for its rotation about its axis by an operating crank (28).

2. A reaping-conditioning machine according to claim 1, characterised in that the screw-threaded rod (24) and the nut (23) comprise a screw-thread of irreversible type.

3. A reaping-conditioning machine according to claim 1 or 2, characterised in that the means for adjusting the position of the conditioning hood (12) are provided on one edge only, the other edge being pivotally connected to the body (1, 7) of the machine or being rigidly fixed (at 14) to said body.

4. A reaping-conditioning machine according to claim 1 or 2, characterised in that the means for adjusting the position of the hood (12) are provided for each edge of the conditioning hood (12).

5. A reaping-conditioning machine according to claim 1, characterised in that the bar (16) engaged with the edge of the hood (12) extends on respective sides of the adjusting means (18) which are positioned towards the middle of the conditioning hood (12).

6. A reaping-conditioning machine according to claim 1, characterised in that there is provided an adjusting means (18) on each side of the conditioning hood (12).

7. A reaping-conditioning machine according to any one of the preceding claims, characterised in that the connection between the nut (23) and the bar (16) is formed by an elbow lever (18) which is mounted for pivotal movement at a fixed point and is disposed in a longitudinal plane of the machine and is connected by the ends of its arms to said nut (23) and to said element (16), respectively.

8. A reaping-conditioning machine according to any one of claims 1 to 6, characterised in that the connection between the nut (23) and the bar (16) engaged with the edge of the hood is formed by a link (29) which is connected by its ends to said nut (23) and to said element (16), respectively.

FIG. 1

EP 0 064 115 B2

FIG. 2

FIG. 3